# EUROPÄISCHE PATENTANMELDUNG

(11) **EP 4 582 170 A1**
(43) Veröffentlichungstag der Anmeldung: **09.07.2025**
(21) Anmeldenummer: 24150688.0
(22) Anmeldetag: 08.01.2024
(51) Int. Cl.: B01D 53/04, B01D 53/14, C01B 3/50

(54) **VERFAHREN ZUR ABTRENNUNG VON KOHLENDIOXID AUS SYNTHESEGAS**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Linicus, Matthias, 60439 Frankfurt (DE); Schmidt, Sophia, 60439 Frankfurt (DE); Raventos, Martin, 94503 Champigny-sur-Marne (FR)
(74) Vertreter: Air Liquide

(57) **Zusammenfassung**

Gegenstand der Erfindung ist ein Verfahren zur Herstellung von Wasserstoff aus einem Synthesegasstrom, in dem Kohlendioxid durch Absorption aus dem Synthesegasstrom entfernt wird. Nach Desorption des Kohlendioxids aus dem Absorptionsmittel wird im resultierenden Kohlendioxidstrom enthaltenes Absorptionsmittel durch Adsorption an einem festen Adsorbens, beispielsweise aufgrund einer Molekularsiebwirkung, entfernt. Ein Teil des so erhaltenen Kohlendioxidstroms, nunmehr frei von Absorptionsmittel, wird erhitzt und zum Regenerieren des beladenen festen Adsorbens genutzt. Gegenstand der Erfindung ist ferner eine Anlage zur Durchführung des erfindungsgemäßen Verfahrens.

## Beschreibung

Die Erfindung betrifft ein Verfahren und eine Anlage zur Abtrennung von Kohlendioxid aus einem Synthesegasstrom, welcher zumindest Wasserstoff (H₂) und Kohlendioxid (CO₂) umfasst.

Bei der Wasserstoffproduktion aus Synthesegas wird Kohlendioxid bei der Reformierung fossiler Einsatzstoffe und einer nachgeschalteten Wassergas-Shift gebildet. Das gebildete Synthesegas-Gemisch, welches nunmehr Wasserstoff und Kohlendioxid als Hauptkomponenten umfasst, wird anschließend von Kohlendioxid befreit. Der dadurch gebildete Kohlendioxidstrom kann weiter verwendet oder sequestriert werden. Für die Weiterverwendung kann dieser Strom abhängig von der jeweiligen Anwendung in gasförmiger oder flüssiger Form bereitgestellt werden.

Wird das Kohlendioxidprodukt in flüssiger Form benötigt, erfolgt die Verflüssigung üblicherweise durch Kühlen und Verdichtung. Voraussetzung dafür ist, dass das Kohlendioxid weitgehend frei von Spurenverunreinigungen ist, welche die Verflüssigung beeinträchtigen, und frei von Wasser ist, so dass Einfrierungen in den verwendeten Apparaten während der Abkühlung unter den Gefrierpunkt von Wasser verhindert werden.

Für die Entfernung von Kohlendioxid aus dem geshifteten Synthesegas kann ein physikalisches oder ein chemisches Absorptionsverfahren Verwendung finden.

Als Absorptionsmittel in physikalischen Absorptionsverfahren kommen Lösungsmittel wie Methanol, N-Methyl-2-Pyrrolidon, Mischungen von Dimethylethern von Polyethylenglycol, sowie Propylencarbonat (4-Methyl-1,3-dioxolan-2-on) in Frage.

Als Absorptionsmittel in physikalischen Absorptionsverfahren kommen Lösungsmittel wie Methanol, N-Methyl-2-Pyrrolidon, Mischungen von Dimethylethern von Polyethylenglycol, sowie Propylencarbonat (4-Methyl-1,3-dioxolan-2-on) in Frage.

Als Absorptionsmedium in chemischen Wäschen kommen inbesondere Amine, wie Monoethanolamin (MEA), Diethanolamin (DEA), Methyldiethanolamin (MDEA), Diglycolamin (DGA), oder Aminomethylpropanol (AMP) in Frage. Die Wirkung der chemischen Absorption kann dabei durch einen Promotor wie Piperazin (PZ) verstärkt werden. Ammoniak-Lösungen, insbesondere wässrige Ammoniak-Lösungen, sind ebenfalls als Absorptionsmittel für Kohlendioxid bekannt.

Bei den vorgenannten Verfahren werden in dem Kohlendioxid-Produkt nach Desorption aus dem Absorptionsmittel für die Verflüssigung des Kohlendioxids nicht tolerable Restmengen an Absorptionsmittel gefunden, welche daher entfernt werden müssen.

Bei der Verwendung eines polaren, das heißt wasserlöslichen Absorptionsmittels, kann dieses durch eine Wäsche mit Wasser in einer gesonderten Waschkolonne entfernt werden.

Eine solche Konfiguration weist jedoch mehrere Nachteile auf. Erstens ist ein zusätzliches Hilfsmittel erforderlich, nämlich entsalztes Wasser oder Kesselspeisewasser. Zweitens ist eine zusätzlich Kolonne ausschließlich für die Wasserwäsche erforderlich. Drittens müssen bestimmte medienberührende Bauteile als rostfreier Edelstahl ausgeführt werden, da Kohlendioxid und Wasser Kohlensäure als korrosives Medium bilden. Viertens muss ein weiteres System für die Trennung des Wassers von dem Kohlendioxid in die Anlage integriert werden. Und fünftens muss das Waschwasser von dem abgetrennten Methanol durch Destillation in der üblicherweise vorhandenen Destillationskolonne thermisch getrennt werden. Dies erhöht aufgrund großer zusätzlicher Wassermengen den Energiebedarf des Verfahrens.

Eine weitere Möglichkeit zur Abtrennung des Absorptionsmittels ist dessen Kondensation durch Kältezufuhr, beispielsweise in einem mit Kältemittel betriebenen Wärmetauscher, und die anschließende Rückführung des Absorptionsmittels zur Absorptionskolonne. Der Nachteil dieser Lösung ist einer hoher Bedarf an Energie und Bedarf an zusätzlicher Ausrüstung.

Allgemein ist es daher eine Aufgabe der vorliegenden Erfindung, die vorgenannten Nachteile zumindest teilweise zu überwinden.

Ein Beitrag zur mindestens teilweisen Lösung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Abtrennung von Kohlendioxid aus einem Synthesegasstrom, welcher zumindest Wasserstoff (H₂) und Kohlendioxid (CO₂) umfasst, aufweisend die Verfahrensschritte
(a) Bereitstellen eines Absorptionsmittels;
(b) Entfernen von Kohlendioxid aus dem Synthesegasstrom durch Absorption, wodurch ein mit Kohlendioxid beladenes Absorptionsmittel und ein wasserstoffhaltiger Produktstrom erhalten werden;
(c) Desorption von Kohlendioxid aus dem beladenen Absorptionsmittel durch einen Desorptionsschritt, wodurch ein an Kohlendioxid verarmtes Absorptionsmittel und ein absorptionsmittelhaltiger Kohlendioxid-Produktstrom erhalten werden;
(d) Entfernen von Absorptionsmittel aus dem absorptionsmittelhaltigen Kohlendioxid-Produktstrom durch Adsorption des Absorptionsmittels an einem festen Adsorbens, wodurch ein Kohlendioxid-Produktstrom und ein mit Absorptionsmittel beladenes Adsorbens erhalten werden;
(e) Ausleiten eines ersten Teilstroms des Kohlendioxid-Produktstroms aus dem Verfahren;
(f) Erhitzen eines zweiten Teilstroms des Kohlendioxid-Produktstroms auf eine Desorptionstemperatur, wodurch ein Regeneriergasstrom erhalten wird, und Leiten des Regeneriergasstroms durch das beladene Adsorbens, so dass ein regeneriertes Adsorbens durch Desorption des Absorptionsmittels vom Adsorbens und ein absorptionsmittelhaltiger Regeneriergasstrom erhalten werden.

Erfindungsgemäß wird von dem Kohlendioxid-Produktstrom mitgeschlepptes Absorptionsmittel durch Adsorption an einem festen Adsorbens entfernt. Das mit Absorptionsmittel beladene Adsorbens wird anschließend durch einen erhitzten Teilstrom des absorptionsmittelfreien Kohlendioxid-Produktstrom regeneriert. In dem der Produktstrom als Regenerierstrom verwendet wird und zusammen mit dem desorbierten Absorptionsmittel als einzelner Strom zur Anlage zurückgeführt werden kann, treten keine Verluste an Absorptionsmittel und Kohlendioxid-Produkt auf.

Gemäß einer Ausführungsform wird der absorptionsmittelhaltige Regeneriergasstrom daher anschließend wieder dem Verfahren zugeführt.

Eine bevorzugte Ausführungsform des Verfahrens ist dadurch gekennzeichnet, dass gemäß Schritt (a) ein physikalisch wirkendes Absorptionsmittel bereitgestellt wird, das Entfernen des Kohlendioxids gemäß Schritt (b) durch physikalische Absorption bei Absorptionsdruck erfolgt, und die Desorption des Kohlendioxids gemäß Schritt (c) durch zumindest einen Drucksenkungsschritt bei Desorptionsdruck erfolgt, wobei der Desorptionsdruck niedriger ist als der Absorptionsdruck.

Bei dem physikalisch wirkenden Absorptionsmittel handelt es sich vorzugsweise um Methanol. Gemäß Schritt (a) wird in diesem Fall daher vorzugsweise Methanol als physikalisch wirkendes Absorptionsmittel bereitgestellt. Vorzugsweise wird das Kohlendioxid in der Absorptionsvorrichtung gemäß Schritt (b) bei niedrigen Temperaturen, insbesondere tiefkalten Temperaturen, in Methanol absorbiert. Die Absorption bei Absorptionsdruck wird vorzugsweise in einer Absorptionsvorrichtung durchgeführt. Vorzugsweise weist das Methanol vor Eintritt in die Absorptionsvorrichtung eine Temperatur von weniger als minus 10 °C auf, oder von weniger als minus 20 °C auf, oder von weniger als minus 30 °C auf, oder von weniger als minus 40 °C auf. Vorzugsweise weist das Methanol vor Eintritt in die Absorptionsvorrichtung eine Temperatur von mehr als minus 70 °C auf, oder von mehr als minus 60 °C auf.

Die Absorptionsvorrichtung ist beispielsweise als Absorptionskolonne ausgestaltet und wird bei Absorptionsdruck betrieben. Bei Absorptionsdruck handelt es sich um erhöhten Druck, insbesondere einen Druck deutlich oberhalb des Umgebungsdrucks, insbesondere einen Druck von mehr als 20 bar, oder mehr als 30 bar, beispielsweise von 20 bis 80 bar, vorzugsweise 25 bis 70 bar, weiter bevorzugt 35 bis 55 bar, weiter bevorzugt 35 bis 45 bar.

Gemäß Schritt (c) wird Kohlendioxid durch Drucksenkung auf einen Desorptionsdruck aus dem Absorptionsmittel desorbiert, also wieder freigesetzt. Vorzugsweise wird die Desorption in einer geeigneten Regenerationsvorrichtung durchgeführt. Vorzugsweise weist die Regenrationsvorrichtung eine Mehrzahl in Serie geschalteter Flash-Stufen auf. Die Flash-Stufen sind beispielsweise als Flash-Kolonnen oder Flash-Behälter ausgestaltet. In Serie geschaltet bedeutet insbesondere, dass die Mehrzahl an Flash-Stufen hintereinander geschaltet sind und untereinander in Fluidverbindung stehen, insbesondere zwei unmittelbar hintereinander geschaltete Flash-Stufen in Fluidverbindung stehen. Der Druck in einer Flash-Stufe ist niedriger als der Absorptionsdruck und wird vorzugsweise von Flash-Stufe zu Flash-Stufe in Flussrichtung des Absorptionsmittels herabgesetzt.

Der Druck in einer nachgeschalteten Flash-Stufe ist also grundsätzlich niedriger als der Druck in der dieser Flash-Stufe vorgeschalteten Flash-Stufe.

Eine bevorzugte Ausführungsform des Verfahrens ist dadurch gekennzeichnet, dass gemäß Schritt (a) ein chemisch wirkendes Absorptionsmittel bereitgestellt wird, das Entfernen des Kohlendioxids gemäß Schritt (b) durch chemische Absorption bei einer Absorptionstemperatur erfolgt, und die Desorption des Kohlendioxids gemäß Schritt (c) durch zumindest einen Heizschritt bei einer Regeneriertemperatur erfolgt, wobei die Regeneriertemperatur höher ist als die Absorptionstemperatur.

Bei dem chemisch wirkenden Absorptionsmittel handelt es sich vorzugsweise um ein Amin. Dabei kommt eines oder eine Mischung der vorgenannten Amine als Absorptionsmittel in Frage. Die Absorption des Kohlendioxids an dem chemischen Absorptionsmittel erfolgt bei einer Absorptionstemperatur, beispielsweise bei Umgebungstemperatur. Die Desorption des Kohlendioxids vom chemischen Absorptionsmittels erfolgt bei einer Regeneriertemperatur, welche höher ist als die Absorptionstemperatur. Ein Beispiel ist die Desorption des Kohlendioxids vom Amin in einer Regenerationskolonne durch Erhitzen der beladenen Aminlösung im Sumpf der Kolonne durch indirekten Wärmeaustausch mit Dampf.

Das Synthesegas wird vorzugsweise durch Reformieren oder Dampfreformieren eines fossilen Einsatzstoffs, oder durch Vergasung von kohlenstoffhaltigen Feststoffen erzeugt.

Der Einsatzstoff ist vorzugsweise Erdgas, eine andere kohlenwasserstoffhaltige Quelle fossilen Ursprungs, oder Biomasse. Beispiele für kohlenstoffhaltige Feststoffe sind Abfälle wie Hausmüll (*municipal solid waste*)*,* sowie Abfälle aus der Holzverarbeitung.

Beispiele für Reformierungsverfahren zur Erzeugung des Synthesegases sind autothermes Reformieren (ATR), partielle Oxidation (POx), sowie Vergasungsverfahren wie Festbettvergasung, Flugstromvergasung und Wirbelschichtvergasung.

Das durch Reformieren, Dampfreformieren oder Vergasung primär erzeugte Synthesegas enthält zumindest Wasserstoff, Kohlenmonoxid und Kohlendioxid. Durch eine vorzugsweise nachfolgend durchgeführte Wassergas-Shift wird Kohlenmonoxid mit Wasser zu Kohlendioxid und Wasserstoff umgesetzt. Das resultierende Synthesegas weist als Hauptkomponenten Wasserstoff und Kohlendioxid auf.

Der gemäß Schritt (b) erhaltene Wasserstoff-Produktstrom ist als Rohwasserstoffprodukt zu verstehen und kann durch weitere geeignete Maßnahmen von Verunreinigungen befreit werden. Insbesondere sind dafür als geeignete Verfahren Wechseldruckadsorption (PSA) und Membrantrennung mit einer für Wasserstoff selektiven Membran zu nennen.

Typische Absorptionsmittelmengen in Bezug auf den Kohlendioxid-Produktstrom im Sinne von Schritt (d) sind 200 ppmv bis 2000 ppmv, insbesondere 500 ppmv bis 1500 ppmv.

Gemäß einer bevorzugten Ausführungsform ist für den Fall der physikalischen Absorption in Schritt (c) zumindest ein flash-Schritt in einer flash-Kolonne vorgesehen, und zumindest ein Teil des absorptionsmittelhaltigen Regeneriergasstroms wird besagter flash-Kolonne zugeführt.

Ein "flash-Schritt" ist dabei als ein Drucksenkungsschritt zu verstehen, wobei der Zieldruck stets niedriger ist als der Absorptionsdruck.

Der absorptionsmittelhaltige Regeneriergasstrom weist eine erhöhte Temperatur auf. Dadurch wird die Wirkung in der flash-Kolonne in Bezug auf die Desorption oder Strippung des Kohlendioxids verstärkt, ohne dass ein zusätzlicher Energieeintrag notwendig wäre. Sind mehrere Flash-Stufen vorgesehen, kann der absorptionsmittelhaltige Regeneriergasstrom jeder beliebigen Flash-Stufe zugeführt werden. Bevorzugt weist der absorptionsmittelhaltige Regeneriergasstrom einen Druck von 5 bar oder weniger auf, und wird einer flash-Stufe mit entsprechendem oder niedrigerem Druck zugeführt.

Gemäß einer bevorzugten Ausführungsform ist für den Fall der physikalischen Absorption in Schritt (c) in Flussrichtung des Absorptionsmittels ein Heißregenerationsschritt in einer Heißregenerationskolonne vorgesehen, und zumindest ein Teil des absorptionsmittelhaltigen Regeneriergasstroms wird besagter Heißregenerationskolonne zugeführt.

Auch gemäß einer solchen Konfiguration wird die Wirkung in der Heißregenerationskolonne in Bezug auf die Desorption oder Strippung des Kohlendioxids verstärkt, ohne dass ein zusätzlicher Energieeintrag notwendig wäre.

Gemäß einer bevorzugten Ausführungsform umfasst das Verfahren zumindest einen Destillationsschritt in einer Destillationskolonne zur thermischen Abtrennung von mit dem Synthesegas eingeschlepptem Wasser vom Absorptionsmittel, und zumindest ein Teil des absorptionsmittelhaltigen Regeneriergasstroms wird besagter Destillationskolonne zugeführt.

Gemäß dieser Konfiguration trägt die über die Rückführung des absorptionsmittelhaltigen Regeneriergasstroms eingetragene Wärme zur thermischen Trennung des Absorptionsmittels von Wasser, vorzugsweise von Methanol und Wasser, bei. Zudem kann der absorptionsmittelhaltige Regeneriergasstrom auch wasserhaltig sein. Dieses Wasser kann durch das Synthesegas in das Verfahren eingeschleppt worden sein. Dadurch wird dieses Wasser nicht in den Absorptionsmittelkreislauf eingetragen, was die Wirkung des Absorptionsmittels beeinträchtigen könnte.

Eine bevorzugte Ausführungsform des Verfahrens umfasst, dass der zweite Teilstrom des Kohlendioxid-Produktstroms auf eine Desorptionstemperatur von 75 °C bis 225 °C erhitzt wird, vorzugsweise von 100 °C bis 200 °C erhitzt wird, weiter bevorzugt von 125 °C bis 175 °C erhitzt wird.

Eine weitere bevorzugte Ausführungsform des Verfahrens umfasst, dass der Anteil des Volumenstroms des zweiten Teilstroms am Volumenstrom des Gesamtstroms des Kohlendioxid-Produktstroms in einem Bereich von 1 % bis 25 % liegt, vorzugsweise in einem Bereich von 5 % bis 20 % liegt, weiter bevorzugt in einem Bereich von 10 % bis 15 % liegt.

Gemäß einer weiteren Ausführungsform des Verfahrens kann dem Adsorbens stromab zumindest ein weiteres Adsorbens, insbesondere zumindest ein weiteres Adsorbens in zumindest einem Festbett, angeordnet sein. Das zumindest eine weitere Adsorbens ist zur Adsorption weiterer in dem Synthesegas enthaltenen Verunreinigungen eingerichtet. Insbesondere wird in dem zumindest einen weiteren Adsorbens zumindest eine Komponente aus der Gruppe
- Cyanid-haltige Verbindungen (insbesondere Blausäure),
- Schwefelhaltige Verbindungen (insbesondere Schwefelwasserstoff, Kohlenstoffdisulfid, Thiole, Carbonylsulfid, schwefelhaltige Heteroaromaten wie Thiophen), und
- Ammoniak
adsorptiv entfernt.

Weiter bevorzugt ist, dass die Adsorption des Absorptionsmittels am Adsorbens aufgrund einer Molekularsiebwirkung des Adsorbens erfolgt.

Das Adsorbens ist vorzugsweise in einem Festbettreaktor angeordnet.

Eine dabei bevorzugte Ausführungsform des Verfahrens umfasst, dass das Verfahren zumindest zwei Festbettreaktoren umfasst, wobei
i. in einem ersten festgelegten Zeitraum das Adsorbens des ersten Festbettreaktors durch Durchleiten des absorptionsmittelhaltigen Kohlendioxid-Produktstroms beladen wird und das Adsorbens des zweiten Festbettreaktors durch Durchleiten des Regeneriergasstroms regeneriert wird, und
ii. in einem zweiten festgelegten Zeitraum, welcher dem ersten Zeitraum zumindest teilweise zeitlich nachgeordnet ist, das Adsorbens des ersten Festbettreaktors durch Durchleiten des Regeneriergasstroms regeneriert wird, und das Adsorbens des zweiten Festbettreaktors durch Durchleiten des absorptionsmittelhaltigen Kohlendioxid-Produktstroms beladen wird.

Die Entfernung des Absorptionsmittels aus dem Kohlendioxid-Produktstrom kann auch mit Hilfe mehrerer Festbettreaktoren erfolgen.

Vorzugsweise wird eine Mehrbettanordnung gewählt, so dass mindestens ein Festbett regeneriert werden kann, während das andere Festbett oder die anderen Festbetten noch im Adsorptionsmodus sind und Absorptionsmittel aus dem Kohlendioxid-Produktstrom entfernen. Nach Abschluss der Regeneration wird das betreffende Festbett wieder in den Adsorptionsmodus geschaltet, und ein anderes Festbett mit teilweise oder vollständig beladenem Adsorbens wird in den Regenerationsmodus geschaltet.

In diesem Zusammenhang bedeuten die Begriffe "Beladen" und "Regenerieren" nicht zwangsläufig, dass das jeweilige Festbett vollständig mit Absorptionsmittel beladen oder vollständig von Absorptionsmittel befreit wird.

Eine bevorzugte Ausführungsform des Verfahrens umfasst, dass die Desorption des Absorptionsmittels vom Adsorbens bei einem Druck erfolgt, welcher niedriger ist als der Adsorptionsdruck zum Adsorbieren des Absorptionsmittels am Adsorbens gemäß Schritt d).

Das Absorptionsmittel wird bei Adsorptionsdruck an dem festen Adsorbens adsorbiert. Bei diesem Adsorptionsdruck kann es sich um einen Druck handeln, welcher im Falle der physikalischen Absorption dem Desorptionsdruck gemäß Schritt (c) entspricht, oder einen höheren Druck. In letzterem Fall ist eine Verdichtung des gemäß Schritt (c) erhaltenen Kohlendioxidstroms erforderlich. Um die Desorption des Absorptionsmittels vom Adsorbens zu erleichtern, wird der Druck während der Desorption mit dem Regeneriergasstrom gegenüber dem Adsorptionsdruck verringert.

Eine bevorzugte Ausführungsform des Verfahrens umfasst, dass der erste Teilstrom des Kohlendioxid-Produktstroms durch zumindest einen Abkühlschritt und zumindest einen Kondensationsschritt verflüssigt wird.

Eine weitere bevorzugte Ausführungsform des Verfahrens umfasst, dass das Adsorbens auch zur Adsorption von Wasser eingerichtet ist.

Bei dem Wasser handelt es sich insbesondere um Wasser, welches durch das Synthesegas eingeschleppt wird, das heißt vor der Gaswäsche mit dem Absorptionsmittel nicht vollständig durch Kühlen und Kondensieren entfernt werden konnte.

Eine weitere bevorzugte Ausführungsform des Verfahrens umfasst, dass das Verfahren einen Feststoffvergaser zum Vergasen eines kohlenstoffhaltigen Einsatzstoffs zur Erzeugung von Synthesegas umfasst, und wobei zumindest ein Teil des absorptionsmittelhaltigen Regeneriergasstroms besagtem Feststoffvergaser zugeführt wird.

Der Feststoffvergaser ist zur Erzeugung von Synthesegas aus einem kohlenstoffhaltigen Einsatzstoff konfiguriert. Bei dem kohlenstoffhaltigen Einsatzstoff handelt es sich vorzugsweise um Biomasse und/oder Hausmüll *(municipal solid waste).* Das durch den Feststoffvergaser erzeugte Synthesegas weist zumindest Wasserstoff, Kohlenmonoxid und Kohlendioxid auf. Dem Feststoffvergaser nachgeschaltet ist insbesondere eine Wassergas-Shift-Stufe zur Umsetzung des Kohlenmonoxids mit Wasser zu Wasserstoff und Kohlendioxid, wodurch der Synthesegasstrom erhalten wird.

Der absorptionsmittelhaltige Regeneriergasstrom kann insbesondere dafür verwendet werden, den Druck im Feststoffvergaser aufrechtzuerhalten. Weiterhin kann das Kohlendioxid des Regeneriergasstroms als Moderator der Vergasungsreaktion Verwendung finden. Dadurch kann beispielsweise auf die Zuführung von Dampf als dedizierten Moderator verzichtet werden.

Die Aufgaben der Erfindung werden ferner zumindest teilweise gelöst durch eine Anlage zur Herstellung von Wasserstoff aus einem Synthesegasstrom, welcher zumindest Wasserstoff (H₂) und Kohlendioxid (CO₂) umfasst, aufweisend folgende in Fluidverbindung stehende Anlagenkomponenten:
(a) Mittel zum Bereitstellen eines Absorptionsmittels;
(b) Mittel zum Entfernen von Kohlendioxid aus dem Synthesegasstrom durch Absorption, wodurch ein mit Kohlendioxid beladenes Absorptionsmittel und ein wasserstoffhaltiger Produktstrom erhältlich sind;
(c) Mittel zur Desorption von Kohlendioxid aus dem beladenen Absorptionsmittel, wodurch ein an Kohlendioxid verarmtes Absorptionsmittel und ein absorptionsmittelhaltiger Kohlendioxid-Produktstrom erhältlich sind;
(d) Mittel zum Entfernen von Absorptionsmittel aus dem absorptionsmittelhaltigen Kohlendioxid-Produktstrom, wobei die Mittel zumindest ein Festbett mit einem festen Adsorbens beinhalten, und das Entfernen des Absorptionsmittels aus dem absorptionsmittelhaltigen Kohlendioxid-Produktstrom durch Adsorption des Absorptionsmittels an dem festen Adsorbens des Festbetts erfolgt, wodurch ein Kohlendioxid-Produktstrom und ein mit Absorptionsmittel beladenes Adsorbens erhältlich sind;
(e) Mittel zum Ausleiten eines ersten Teilstroms des Kohlendioxid-Produktstroms aus dem Verfahren;
(f) Mittel zum Erhitzen eines zweiten Teilstroms des Kohlendioxid-Produktstroms auf eine Desorptionstemperatur, wodurch ein Regeneriergasstrom erhältlich ist, und Mittel zum Leiten des Regeneriergasstroms durch das beladene Adsorbens, so dass ein regeneriertes Adsorbens durch Desorption des Absorptionsmittels vom Adsorbens und ein absorptionsmittelhaltiger Regeneriergasstrom erhältlich sind.

In dem folgenden Ausführungsbeispiel wird die Erfindung unter Hinzuziehung der Zeichnung näher erläutert. Das Ausführungsbeispiel stellt eine beispielhafte Ausgestaltung der Erfindung dar, ohne diese in ihrem Umfang zu beschränken.

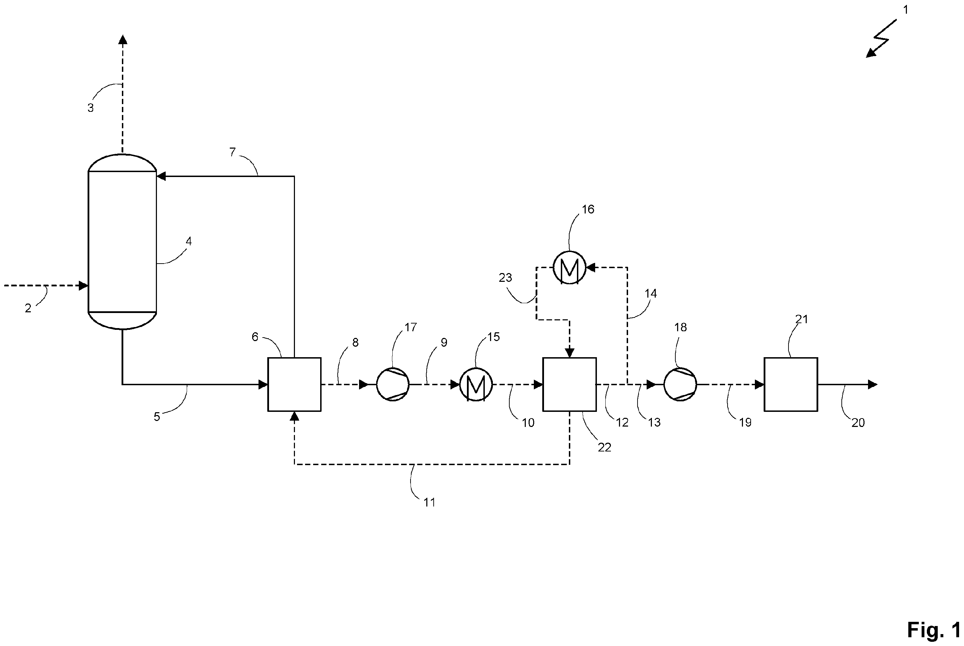

Es zeigt
- Figur 1: ein stark vereinfachtes Blockfließbild eines Verfahrens gemäß einem Ausführungsbeispiel der Erfindung.

Gasströme sind als gestrichelte Linien dargestellt, während Flüssigkeitsströme als durchgezogene Linien dargestellt sind. Gasströme können eine flüssige Phase enthalten und Flüssigkeitsströme können eine Gasphase enthalten. Pfeilspitzen stellen die Flussrichtung des jeweiligen Stroms dar. In dem Beispiel wird Kohlendioxid durch physikalische Absorption entfernt. Absorptionsmittel ist Methanol.

Einer Absorptionskolonne 4 wird in einem unteren Bereich ein Synthesegasstrom 2 zugeführt, der als Hauptkomponenten Wasserstoff und Kohlendioxid aufweist. Der Absorptionskolonne 4 wird im Kopfbereich ein Methanolstrom 7 aus regeneriertem Methanol zugeführt. In der Absorptionskolonne 4, die bei erhöhtem Druck (zum Beispiel 40 bar) betrieben wird, werden der Synthesegasstrom 2 und der Methanolstrom 7 im Gegenstrom geführt. Innerhalb der Absorptionskolonne 4 weist der Methanolstrom eine Temperatur von weniger als minus 30 °C auf. Dabei nimmt das Absorptionsmittel (Methanol) das Kohlendioxid aus dem Synthesegasstrom 2 auf. Ein Wasserstoffstrom 3 wird in einem Kopfbereich aus der Absorptionskolonne 4 ausgeleitet und kann einer weiteren Reinigung, zum Beispiel durch Druckwechseladsorption, zugeführt werden (nicht gezeigt).

Aus dem Sumpf der Absorptionskolonne 4 wird entsprechend ein kohlendioxidbeladener Methanolstrom 5 abgezogen und einem Flash-System 6 zugeführt. Das Flash-System 6 kann mehrere seriell geschaltete Flash-Kolonnen (nicht gezeigt) umfassen. Im Flash-System 6 wird Kohlendioxid aus dem kohlendioxidbeladenen Methanolstrom 5 desorbiert. Dabei wird der regenerierte Methanolstrom 7 erhalten. Gleichzeitig wird ein Kohlendioxid-Produktstrom 8 erhalten, welcher in etwa 1000 ppmv Methanol enthält. Darüber hinaus kann dieser Strom Wasser enthalten. Der Druck dieses Kohlendioxid-Produktstroms 8 wird zunächst durch einen Verdichter 17 erhöht, um die nachfolgende Adsorption von Methanol und gegebenenfalls Wasser am Adsorbens zu erleichtern. Der verdichtete methanolhaltige Kohlendioxid-Produktstrom 9 wird anschließend durch einen Wärmeübertrager 15 auf etwa 40 °C gekühlt.

Der verdichtete und gekühlte methanolhaltige Kohlendioxid-Produktstrom 10 wird anschließend einem Festbett-Reaktorsystem 22 zugeführt, welches über mindestens zwei Festbettreaktoren verfügt (nicht gezeigt). Innerhalb der Festbettreaktoren ist jeweils ein Festbett aus einem Adsorbens angeordnet, welches Methanol und Wasser aufgrund einer Molekularsiebwirkung aus dem methanolhaltigen Kohlendioxid-Produktstrom 10 entfernt. Nach der Adsorption des Methanols (und gegebenenfalls Wassers) am Adsorbens wird das jeweilige Festbett regeneriert. Dies erfolgt, indem von dem erhaltenen methanolfreien Kohlendioxid-Produkstrom 12 ein Teilstrom 14 abgezweigt wird und durch einen Wärmeübertrager 16 auf etwa 150 °C erhitzt wird. Dadurch wird ein Regeneriergasstrom 23 erhalten, welcher durch das jeweilige Adsorbens-Festbett des Festbett-Reaktorsystems 22 durchgeleitet wird. Während dies geschieht, kann ein weiterer Festbettreaktor des Festbett-Reaktorsystems 22 mit Methanol und gegebenenfalls Wasser aus dem verdichteten Strom 10 beladen werden. Während der Regeneration durch den Regeneriergasstrom 23 wird der Druck im jeweiligen Festbett gesenkt. Der bei der Regeneration erzeugte methanolhaltige Regeneriergasstrom 11 wird zu dem Flash-System 6 zurückgeführt. Dadurch treten im gesamten Verfahren keine Verluste an Kohlendioxid und Methanol auf. Alternativ oder zusätzlich kann der Regeneriergasstrom 11 einer Destillationskolonne (nicht gezeigt) zugeführt werden. Dadurch wird im Regeneriergasstrom gegebenenfalls vorhandenes Wasser nicht in den Methanolkreislauf des Gaswäscheverfahrens eingeschleppt.

Der Teilstrom 13 des Kohlendioxidproduktstroms wird in einem Kompressor 18 verdichtet und anschließend als verdichteter, nunmehr methanol- und wasserfreier Kohlendioxid-Produktstrom 19 einer Einheit für Kohlendioxid-Verflüssigung 21 zugeführt. In der Einheit 21 wird Kohlendioxid durch mehrere Abkühlschritte und nachfolgende Kondensation verflüssigt. Die Einheit 21 kann weiterhin auch einen kryogenen Destillationsschritt für die weitere Reinigung des Kohlendioxid-Produktstroms 19 aufweisen.

### Bezugszeichenliste

- 1: Verfahren
- 2: Synthesegasstrom
- 3: Wasserstoffstrom
- 4: Absorptionskolonne
- 5: Methanolstrom, kohlendioxidbeladen
- 6: Flash-System
- 7: Methanolstrom, regeneriert
- 8: Methanolhaltiger Kohlendioxid-Produktstrom
- 9: Methanolhaltiger Kohlendioxid-Produktstrom (verdichtet)
- 10: Methanolhaltiger Kohlendioxid-Produktstrom (verdichtet, gekühlt)
- 11: Methanolhaltiger Regeneriergasstrom
- 12: Kohlendioxid-Produktstrom (Gesamtstrom, methanolfrei)
- 13: Kohlendioxid-Produktstrom (erster Teilstrom)
- 14: Kohlendioxid-Produktstrom (zweiter Teilstrom)
- 15, 16: Wärmeübertrager
- 17, 18: Verdichter
- 19: Kohlendioxid-Produktstrom (erster Teilstrom, verdichtet)
- 20: Kohlendioxid-Produktstrom (verflüssigt)
- 21: Einheit für Kohlendioxid-Verflüssigung
- 22: Festbettreaktor-System
- 23: Regeneriergasstrom

## Patentansprüche

1. Verfahren (1) zur Abtrennung von Kohlendioxid aus einem Synthesegasstrom (2), welcher zumindest Wasserstoff (H₂) und Kohlendioxid (CO₂) umfasst, aufweisend die Verfahrensschritte
(a) Bereitstellen eines Absorptionsmittels;
(b) Entfernen von Kohlendioxid aus dem Synthesegasstrom (2) durch Absorption, wodurch ein mit Kohlendioxid beladenes Absorptionsmittel (5) und ein wasserstoffhaltiger Produktstrom (3) erhalten werden;
(c) Desorption von Kohlendioxid aus dem beladenen Absorptionsmittel (5) durch einen Desorptionsschritt, wodurch ein an Kohlendioxid verarmtes Absorptionsmittel (7) und ein absorptionsmittelhaltiger Kohlendioxid-Produktstrom (8) erhalten werden;
(d) Entfernen von Absorptionsmittel aus dem absorptionsmittelhaltigen Kohlendioxid-Produktstrom (8) durch Adsorption des Absorptionsmittels an einem festen Adsorbens, wodurch ein Kohlendioxid-Produktstrom (12) und ein mit Absorptionsmittel beladenes Adsorbens erhalten werden;
(e) Ausleiten eines ersten Teilstroms (13) des Kohlendioxid-Produktstroms (12) aus dem Verfahren;
(f) Erhitzen eines zweiten Teilstroms (14) des Kohlendioxid-Produktstroms auf eine Desorptionstemperatur, wodurch ein Regeneriergasstrom (23) erhalten wird, und Leiten des Regeneriergasstroms (23) durch das beladene Adsorbens, so dass ein regeneriertes Adsorbens durch Desorption des Absorptionsmittels vom Adsorbens und ein absorptionsmittelhaltiger Regeneriergasstrom (11) erhalten werden.

2. Verfahren nach Anspruch 1, wobei gemäß Schritt (a) ein physikalisch wirkendes Absorptionsmittel bereitgestellt wird, das Entfernen des Kohlendioxids gemäß Schritt (b) durch physikalische Absorption bei Absorptionsdruck erfolgt, und die Desorption des Kohlendioxids gemäß Schritt (c) durch zumindest einen Drucksenkungsschritt bei Desorptionsdruck erfolgt, wobei der Desorptionsdruck niedriger ist als der Absorptionsdruck.

3. Verfahren nach Anspruch 1, wobei gemäß Schritt (a) ein chemisch wirkendes Absorptionsmittel bereitgestellt wird, das Entfernen des Kohlendioxids gemäß Schritt (b) durch chemische Absorption bei einer Absorptionstemperatur erfolgt, und die Desorption des Kohlendioxids gemäß Schritt (c) durch zumindest einen Heizschritt bei einer Regeneriertemperatur erfolgt, wobei die Regeneriertemperatur höher ist als die Absorptionstemperatur.

4. Verfahren nach Anspruch 1 oder 2, wobei in Schritt (c) zumindest ein flash-Schritt in einer flash-Kolonne vorgesehen ist, und wobei zumindest ein Teil des absorptionsmittelhaltigen Regeneriergasstroms (11) besagter flash-Kolonne zugeführt wird.

5. Verfahren nach einem der Ansprüche 1, 2 oder 4, wobei stromab Schritt (c) in Flussrichtung des Absorptionsmittels ein Heißregenerationsschritt in einer Heißregenerationskolonne vorgesehen ist, und wobei zumindest ein Teil des absorptionsmittelhaltigen Regeneriergasstroms (11) besagter Heißregenerationskolonne zugeführt wird.

6. Verfahren nach einem der vorhergehenden Ansprüche, wobei das Verfahren zumindest einen Destillationsschritt in einer Destillationskolonne zur thermischen Abtrennung von mit dem Synthesegas eingeschlepptem Wasser vom Absorptionsmittel umfasst, und wobei zumindest ein Teil des absorptionsmittelhaltigen Regeneriergasstroms (11) besagter Destillationskolonne zugeführt wird.

7. Verfahren nach einem der vorhergehenden Ansprüche, wobei der zweite Teilstrom (14) des Kohlendioxid-Produktstroms (12) auf eine Desorptionstemperatur von 75 °C bis 225 °C erhitzt wird, vorzugsweise von 100 °C bis 200 °C erhitzt wird, weiter bevorzugt von 125 °C bis 175 °C erhitzt wird.

8. Verfahren nach einem der vorhergehenden Ansprüche, wobei der Anteil des Volumenstroms des zweiten Teilstroms (14) am Volumenstrom des Gesamtstroms (12) des Kohlendioxid-Produktstroms in einem Bereich von 1 % bis 25 % liegt, vorzugsweise in einem Bereich von 5 % bis 20 % liegt, weiter bevorzugt in einem Bereich von 10 % bis 15 % liegt.

9. Verfahren nach einem der vorhergehenden Ansprüche, wobei die Adsorption des Absorptionsmittels am Adsorbens aufgrund einer Molekularsiebwirkung des Adsorbens erfolgt.

10. Verfahren nach einem der vorhergehenden Ansprüche, wobei das Adsorbens in einem Festbettreaktor angeordnet ist.

11. Verfahren nach Anspruch 10, wobei das Verfahren zumindest zwei Festbettreaktoren umfasst, wobei
i. in einem ersten festgelegten Zeitraum das Adsorbens des ersten Festbettreaktors durch Durchleiten des absorptionsmittelhaltigen Kohlendioxid-Produktstroms beladen wird und das Adsorbens des zweiten Festbettreaktors durch Durchleiten des Regeneriergasstroms regeneriert wird, und
ii. in einem zweiten festgelegten Zeitraum, welcher dem ersten Zeitraum zeitlich nachgeordnet ist, das Adsorbens des ersten Festbettreaktors durch Durchleiten des Regeneriergasstroms regeneriert wird, und das Adsorbens des zweiten Festbettreaktors durch Durchleiten des absorptionsmittelhaltigen Kohlendioxid-Produktstroms beladen wird.

12. Verfahren nach einem der vorgenannten Ansprüche, wobei die Desorption des Absorptionsmittels vom Adsorbens bei einem Druck erfolgt, welcher niedriger ist als der Adsorptionsdruck zum Adsorbieren des Absorptionsmittels am Adsorbens gemäß Schritt d).

13. Verfahren nach einem der vorgenannten Ansprüche, wobei der erste Teilstrom des Kohlendioxid-Produktstroms durch zumindest einen Abkühlschritt und zumindest einen Kondensationsschritt verflüssigt wird.

14. Verfahren nach einem der vorgenannten Ansprüche, wobei das Adsorbens auch zur Adsorption von Wasser eingerichtet ist.

15. Verfahren nach einem der vorgenannten Ansprüche, wobei das Verfahren einen Feststoffvergaser zum Vergasen eines kohlenstoffhaltigen Einsatzstoffs zur Erzeugung von Synthesegas umfasst, und wobei zumindest ein Teil des absorptionsmittelhaltigen Regeneriergasstroms (11) besagtem Feststoffvergaser zugeführt wird.

16. Anlage zur Herstellung von Wasserstoff aus einem Synthesegasstrom, welcher zumindest Wasserstoff (H₂) und Kohlendioxid (CO₂) umfasst, aufweisend folgende in Fluidverbindung stehende Anlagenkomponenten:
(a) Mittel zum Bereitstellen eines Absorptionsmittels;
(b) Mittel zum Entfernen von Kohlendioxid aus dem Synthesegasstrom durch Absorption, wodurch ein mit Kohlendioxid beladenes Absorptionsmittel und ein wasserstoffhaltiger Produktstrom erhältlich sind;
(c) Mittel zur Desorption von Kohlendioxid aus dem beladenen Absorptionsmittel, wodurch ein an Kohlendioxid verarmtes Absorptionsmittel und ein absorptionsmittelhaltiger Kohlendioxid-Produktstrom erhältlich sind;
(d) Mittel zum Entfernen von Absorptionsmittel aus dem absorptionsmittelhaltigen Kohlendioxid-Produktstrom, wobei die Mittel zumindest ein Festbett mit einem festen Adsorbens beinhalten, und das Entfernen des Absorptionsmittels aus dem absorptionsmittelhaltigen Kohlendioxid-Produktstrom durch Adsorption des Absorptionsmittels an dem festen Adsorbens des Festbetts erfolgt, wodurch ein Kohlendioxid-Produktstrom und ein mit Absorptionsmittel beladenes Adsorbens erhältlich sind;
(e) Mittel zum Ausleiten eines ersten Teilstroms des Kohlendioxid-Produktstroms aus dem Verfahren;
(f) Mittel zum Erhitzen eines zweiten Teilstroms des Kohlendioxid-Produktstroms auf eine Desorptionstemperatur, wodurch ein Regeneriergasstrom erhältlich ist, und Mittel zum Leiten des Regeneriergasstroms durch das beladene Adsorbens, so dass ein regeneriertes Adsorbens durch Desorption des Absorptionsmittels vom Adsorbens und ein absorptionsmittelhaltiger Regeneriergasstrom erhältlich sind.
